# EUROPÄISCHE PATENTANMELDUNG

(11) **EP 4 617 130 A1**
(43) Veröffentlichungstag der Anmeldung: **17.09.2025**
(21) Anmeldenummer: 25162136.3
(22) Anmeldetag: 06.03.2025
(51) Int. Cl.: B60W 30/045

(54) **KRAFTFAHRZEUG UND VERFAHREN ZUM BETREIBEN EINES KRAFTFAHRZEUGS MIT EINEM STEER-BY-WIRE-LENKSYSTEM UND EINEM FAHRDYNAMIK-REGELSYSTEM**

(30) Priorität: 11.03.2024 BE 202405139
(71) Anmelder: thyssenkrupp Presta Aktiengesellschaft, 9492 Eschen (LI); thyssenkrupp AG, 45143 Essen (DE)
(72) Erfinder: Lapis, Leonard, 9466 Sennwald (CH)
(74) Vertreter: thyssenkrupp Intellectual Property GmbH

(57) **Zusammenfassung**

Die vorliegende Erfindung betrifft ein Verfahren zum Betreiben eines Kraftfahrzeugs (1) mit einem Steer-by-Wire-Lenksystem (2) und einem Fahrdynamik-Regelsystem (3), wobei das Steer-by-Wire-Lenksystem (2) eine Lenkvorgabe in einen Radlenkwinkel von lenkbaren Rädern (4) des Kraftfahrzeugs (1) umsetzt, und wobei das Fahrdynamik-Regelsystem (3) unter Berücksichtigung einer Fahrtrichtungsvorgabe und eines Fahrzustands des Kraftfahrzeugs (1) eine Bewertung in Bezug auf eine kritische Fahrsituation durchführt, und bei einer erkannten kritischen Fahrsituation durch gezielte Ansteuerung wenigstens einer Bremse (5) des Kraftfahrzeugs (1) und/oder wenigstens einer Antriebseinheit (6) des Kraftfahrzeugs (1) das Kraftfahrzeug (1) zur Behebung der kritischen Fahrsituation stabilisiert, wobei eine Fahrzustandsbewertungseinheit (8) zusätzlich zu dem Fahrdynamik-Regelsystem (3) eine Bewertung in Bezug auf eine kritische Fahrsituation durchführt, und bei einer von der Fahrzustandsbewertungseinheit (8) erkannten kritischen Fahrsituation der Radlenkwinkel zur Stabilisierung des Kraftfahrzeugs (1) verändert wird.

Ferner betrifft die Erfindung ein Kraftfahrzeug (1), das ausgebildet ist, gemäß einem solchen Verfahren betrieben zu werden.

## Beschreibung

Die Erfindung betrifft ein Verfahren zum Betreiben eines Kraftfahrzeugs mit einem Steer-by-Wire-Lenksystem und einem Fahrdynamik-Regelsystem, wobei das Steer-by-Wire-Lenksystem eine Lenkvorgabe in einen Radlenkwinkel von lenkbaren Rädern des Kraftfahrzeugs umsetzt, und wobei das Fahrdynamik-Regelsystem unter Berücksichtigung einer Fahrtrichtungsvorgabe und eines Fahrzustands des Kraftfahrzeugs eine Bewertung in Bezug auf eine kritische Fahrsituation durchführt, und bei einer erkannten kritischen Fahrsituation durch gezielte Ansteuerung wenigstens einer Bremse des Kraftfahrzeugs und/oder wenigstens einer Antriebseinheit des Kraftfahrzeugs das Kraftfahrzeug zur Behebung der kritischen Fahrsituation stabilisiert.

Des Weiteren betrifft die Erfindung ein Kraftfahrzeug umfassend ein Steer-by-Wire-Lenksystem und ein Fahrdynamik-Regelsystem, wobei das Steer-by-Wire-Lenksystem ausgebildet ist, eine Lenkvorgabe in einen Radlenkwinkel von lenkbaren Rädern des Kraftfahrzeugs umzusetzen, und wobei das Fahrdynamik-Regelsystem ausgebildet ist, unter Berücksichtigung einer Fahrtrichtungsvorgabe und eines Fahrzustands des Kraftfahrzeugs eine Bewertung in Bezug auf eine kritische Fahrsituation durchzuführen, und bei einer erkannten kritischen Fahrsituation durch gezielte Ansteuerung wenigstens einer Bremse des Kraftfahrzeugs und/oder wenigstens einer Antriebseinheit des Kraftfahrzeugs, das Kraftfahrzeug zur Vermeidung der kritischen Fahrsituation zu stabilisieren.

Steer-by-Wire-Lenksystem und Fahrdynamik-Regelsysteme sind im Stand der Technik seit langer Zeit bekannt. Ein Steer-by-Wire-Lenksystem wird beispielsweise in der DE 10 2020 205 904 A1 beschrieben. Fahrdynamik-Regelsystem werden schon seit vielen Jahren in Kraftfahrzeugen eingesetzt und sind insbesondere auch unter dem Ausdruck Elektronische Stabilitätskontrolle (kurz ESC; ESC: Electronic Stability Control) bekannt. Bei den Fahrzeugherstellern werden auch davon abweichende Bezeichnungen verwendet, beispielsweise ESP (ESP: Elektronisches Stabilitätsprogramm), DSC (DSC: Dynamic Stability Control) oder VSC (VSC: Vehicle Stability Control). Solche Fahrdynamik-Regelsysteme vergleichen dabei ständig eine von einem Fahrzeugnutzer getätigte Fahrtrichtungsvorgabe mit einem Fahrzustand des Kraftfahrzeugs, um eine kritische Fahrsituation zu erkennen. Wenn dabei eine wesentliche Abweichung des Fahrzustands von der Fahrtrichtungsvorgabe erkannt wird, liegt eine solche kritische Fahrsituation vor. In einer solchen kritischen Fahrsituation versucht das Fahrdynamik-Regelsystem ein Untersteuern oder ein Übersteuern des Kraftfahrzeugs durch ein Abbremsen einzelner Räder des Kraftfahrzeugs zu unterbinden und somit ein Ausbrechen des Kraftfahrzeugs zu verhindern. Fahrdynamik-Regelsystem bringen daher einen hohen Sicherheitsgewinn und haben sich derart bewährt, dass sie in vielen Ländern bereits in einem Kraftfahrzeug verpflichtend vorgeschrieben sind.

Weiterentwicklungen von Fahrdynamik-Regelsystemen sehen bei Fahrzeugen mit aktiv ansteuerbaren Lenksystemen auch aktive Lenkeingriffe durch das Fahrdynamik-Regelsystem vor. Problematisch ist hierbei eine Rückübertragung des aktiven Lenkeingriffs auf die Lenkhandhabe, wodurch ein Fahrzeugnutzer den Eindruck gewinnen kann, dass das Fahrzeug nicht in eine vorgegebene Fahrtrichtung bewegt und das Lenken insofern nicht dem Wunsch des Fahrzeugnutzers entspricht. Ein weiteres Problem kann in der Integration von Brems- und Lenkaktuatoransteuerung liegen, weil Brems- und Lenksystem nicht selten von unterschiedlichen Zulieferern kommen.

Vor diesem Hintergrund soll die Sicherheit beim Betreiben eines Kraftfahrzeugs weiter erhöht werden. Vorteilhafterweise soll dabei zum Erhalt der Zuverlässigkeit und vorteilhafterweise auch zur Einsparung von Kosten auf bewährte Fahrdynamik-Regelsysteme zurückgegriffen werden, die ausgebildet sind, bei einer erkannten kritischen Fahrsituation durch gezielte Ansteuerung wenigstens einer Bremse des Kraftfahrzeugs und/oder wenigstens einer Antriebseinheit des Kraftfahrzeugs das Kraftfahrzeug zur Behebung der kritischen Fahrsituation zu stabilisieren, die aber nicht ausgebildet sind oder zumindest nicht ausgebildet sein müssen, aktive Lenkeingriffe durchzuführen.

Zur Lösung dieser Aufgabe werden ein Verfahren zum Betreiben eines Kraftfahrzeugs sowie ein Kraftfahrzeug gemäß den unabhängigen Ansprüchen vorgeschlagen. Weitere vorteilhafte Ausgestaltungen der Erfindung sind in den abhängigen Ansprüchen und der Beschreibung beschrieben sowie in den Figuren dargestellt.

Die vorgeschlagene Lösung sieht ein Verfahren zum Betreiben eines Kraftfahrzeugs mit einem Steer-by-Wire-Lenksystem und einem Fahrdynamik-Regelsystem vor, wobei das Steer-by-Wire-Lenksystem eine Lenkvorgabe in einen Radlenkwinkel von lenkbaren Rädern des Kraftfahrzeugs umsetzt, und wobei das Fahrdynamik-Regelsystem unter Berücksichtigung einer Fahrtrichtungsvorgabe und eines Fahrzustands des Kraftfahrzeugs eine Bewertung in Bezug auf eine kritische Fahrsituation durchführt, und bei einer erkannten kritischen Fahrsituation durch gezielte Ansteuerung wenigstens einer Bremse des Kraftfahrzeugs und/oder wenigstens einer Antriebseinheit des Kraftfahrzeugs das Kraftfahrzeug zur Behebung der kritischen Fahrsituation stabilisiert. Die Fahrtrichtungsvorgabe berücksichtigt dabei insbesondere eine Lenkradstellung, ein Lenkmoment und/oder eine Pedalstellung, insbesondere eine Pedalstellung eines Bremspedals des Kraftfahrzeugs und/oder eine Pedalstellung eines Beschleunigungspedals des Kraftfahrzeugs. Eine kritische Fahrsituation liegt insbesondere dann vor, wenn eine erfasste Ist-Gierrate für das Kraftfahrzeug von einer bestimmten Soll-Gierrate für das Kraftfahrzeug abweicht. Es können aber insbesondere auch weitere und/oder andere Kriterien für das Vorliegen einer kritischen Fahrsituation zu Grunde gelegt werden. Das Verfahren sieht weiter vor, dass eine Fahrzustandsbewertungseinheit zusätzlich zu dem Fahrdynamik-Regelsystem eine Bewertung in Bezug auf eine kritische Fahrsituation durchführt, wobei bei einer von der Fahrzustandsbewertungseinheit erkannten kritischen Fahrsituation der Radlenkwinkel zur Stabilisierung des Kraftfahrzeugs verändert wird. Die Änderung des Radlenkwinkels wird dabei vorteilhafterweise nicht durch das Fahrdynamik-Regelsystem veranlasst und vorteilhafterweise nicht durch eine entsprechende Ansteuerung durch das Fahrdynamik-Regelsystem veranlasst. Stattdessen ist vorteilhafterweise vorgesehen, dass eine Steuereinheit des Steer-by-Wire-Lenksystems, vorteilhafterweise getriggert durch die Fahrzustandsbewertungseinheit, die insbesondere von der Steuereinheit des Steer-by-Wire-Lenksystems umfasst sein kann, einen Lenksteller des Steer-by-Wire-Lenksystems zur Änderung des Radlenkwinkels ansteuert. Die Bewertung in Bezug auf eine kritische Fahrsituation durch die Fahrzustandsbewertungseinheit wird vorteilhafterweise zusätzlich zu der Bewertung durch das Fahrdynamik-Regelsystem durchführt, sodass die Bewertungen vorteilhafterweise unabhängig voneinander erfolgen können.

Vorteilhafterweise kann somit für das Verfahren ein im Stand der Technik bekanntes Fahrdynamik-Regelsystem eingesetzt werden, das insbesondere bezüglich seiner Architektur und/oder Funktionsweise keiner Änderungen Bedarf und vorteilhafterweise in bekannter Weise in ein Kraftfahrzeug integriert werden kann. Dies wird insbesondere durch die vorgesehene Fahrzustandsbewertungseinheit erreicht, die vorzugsweise von dem Steer-by-Wire-Lenksystem umfasst ist und vorteilhafterweise als Bestandteil der Steuerung zur Ansteuerung des Lenkstellers zur Umsetzung einer Lenkvorgabe in eine Lenkbewegung der lenkbaren Räder ausgebildet ist. So ist insbesondere vorgesehen, dass in einer normalen unkritischen Fahrsituation die Steuereinheit den Lenksteller entsprechend einer empfangenen Lenkvorgabe, die insbesondere über eine Lenkhandhabe von einem Fahrzeugnutzer oder in einem autonomen Fahrmodus von einem Fahrerassistenzsystem vorgegeben werden kann, mit einem entsprechenden Steuersignal ansteuert. Hat die Fahrzustandsbewertungseinheit hingegen basierend auf einer erfassten Fahrrichtungsvorgabe, insbesondere einer Lenkvorgabe, und einem aktuellen Fahrzeugzustand eine kritische Fahrsituation erkannt, wird ein Steuersignal zur Ansteuerung des Lenkstellers, dass sich aus der Lenkvorgabe heraus ergeben würde, von einem Stabilisierungs-Steuersignal überlagert, mit dem der Lenksteller derart angesteuert wird, dass die lenkbaren Räder einen Radlenkwinkel einnehmen, durch den das Kraftfahrzeug stabilisiert wird, und die kritische Fahrsituation wieder in eine normale Fahrsituation überführt wird.

Gemäß einer besonders vorteilhaften Ausgestaltung des Verfahrens ist vorgesehen, dass bei einer von der Fahrzustandsbewertungseinheit erkannten kritischen Fahrsituation zusätzlich die Fahrtrichtungsvorgabe vor der Übertragung an das Fahrdynamik-Regelsystem manipuliert wird, und das Fahrdynamik-Regelsystem unter Berücksichtigung der manipulierten Fahrtrichtungsvorgabe die Bewertung in Bezug auf eine kritische Fahrsituation durchführt. Die Art der Manipulation der Fahrtrichtungsvorgabe ist dabei im Voraus einstellbar. Insbesondere können verschiedene von einem Fahrzeugnutzer auswählbare Fahrprogramme vorgesehen sein, wobei die Manipulation der Fahrtrichtungsvorgabe in Abhängigkeit von dem ausgewählten Fahrprogramm unterschiedlich stark ausgeprägt ist. Vorteilhafterweise kann durch die Manipulation der Fahrtrichtungsvorgabe eine stärke Reaktion des Fahrdynamik-Regelsystems, insbesondere eine stärkerer Regeleingriff hervorgerufen werden, der vorteilhafterweise dazu führt, dass das Fahrzeug in einer kritischen Fahrsituation schneller stabilisiert wird. Somit kann vorteilhafterweise ein Unfallrisiko reduziert werden. Hintergrund ist, dass das Fahrdynamik-Regelsystem je nach Fahrtrichtungsvorgabe und abhängig davon, wie sich die Fahrtrichtungsvorgabe ändert, weniger stark regelnd eingreift, beispielsweise wenn ein Fahrzeugnutzer in einer kritischen Fahrsituation selbst anfängt gegenzulenken. Da das Fahrdynamik-Regelsystem im Normalfall aber schneller und besser reagieren kann, als ein Fahrzeugnutzer, ist es vorteilhaft, dem Fahrdynamik-Regelsystem nicht die tatsächliche Fahrtrichtungsvorgabe, sondern eine manipulierte Fahrtrichtungsvorgabe bereitzustellen.

Die Fahrtrichtungsvorgabe umfasst dabei insbesondere eine erfasste Lenkvorgabe, wobei vorteilhafterweise die erfasste Lenkvorgabe vor der Übertragung an das Fahrdynamik-Regelsystem manipuliert wird. Insbesondere ist dabei vorgesehen, dass eine erfasste Lenkvorgabe ein erfasster Lenkradwinkel ist, wobei in dem Fall ein von dem erfassten Lenkradwinkel abweichender Lenkradwinkel an das Fahrdynamik-Regelsystem übertragen wird. Die Abweichung wird dabei vorteilhafterweise so bestimmt, dass ein stärkerer Regeleingriff durch das Fahrdynamik-Regelsystem hervorgerufen wird, wodurch das Kraftfahrzeug vorteilhafterweise schneller stabilisiert wird und die kritische Fahrsituation schneller normalisiert wird.

Insbesondere ist vorgesehen, dass eine erfasste Lenkvorgabe durch eine Vergrößerung eines der Lenkvorgabe zugrundeliegenden Wertes für den Lenkwinkel manipuliert wird. Vorteilhafterweise wird durch die Vergrößerung des Wertes für den Lenkwinkel eine stärkerer Regeleingriff durch das Fahrdynamik-Regelsystem hervorgerufen.

Eine vorteilhafte Weiterbildung des Verfahrens sieht dabei vor, dass die Vergrößerung des der Lenkvorgabe zugrundeliegenden Wertes für den Lenkwinkel durch ein Ersetzen des der erfassten Lenkvorgabe tatsächlich zugrundeliegenden Lenkwinkelwertes durch einen maximal möglichen Lenkwinkelwert derselben Lenkrichtung erfolgt. So ist insbesondere vorgesehen, dass ein erfasster Lenkwinkelwert von 90° nach links, bei einer von der Fahrzustandsbewertungseinheit erkannten kritischen Fahrsituation, als bei der aktuellen Geschwindigkeit maximaler Lenkwinkelwert von 180° nach links als manipulierte Fahrtrichtungsvorgabe an das Fahrdynamik-Regelsystem übertragen wird. Auf diese Weise sollen vorteilhafterweise maximale Regeleingriffe durch das Fahrdynamik-Regelsystem hervorgerufen werden.

Gemäß einer weiteren vorteilhaften Ausgestaltung des Verfahrens wird der Fahrzustand des Kraftfahrzeugs an die Fahrzustandsbewertungseinheit und an das Fahrdynamik-Regelsystem übertragen. Die Durchführung der Bewertung in Bezug auf eine kritische Fahrsituation wird dann vorteilhafterweise durch die Fahrzustandsbewertungseinheit und durch das Fahrdynamik-Regelsystem jeweils unabhängig voneinander durchgeführt. Vorteilhafterweise sind so einerseits keine Änderungen an dem Fahrdynamik-Regelsystem erforderlich. Andererseits wird hierdurch die Fahrsicherheit weiter erhöht, weil nun zusätzlich auch die Fahrzustandsbewertungseinheit eine Bewertung in Bezug auf eine kritische Fahrsituation vornimmt.

Weiter vorteilhaft ist vorgesehen, dass eine Fahrtrichtungsvorgabe, insbesondere eine Lenkradstellung, ein Lenkmoment und/oder eine Pedalstellung und/oder eine Vorgabe von einem AD-System (AD: autonomous driving), an die Fahrzustandsbewertungseinheit übertragen wird, und die Fahrtrichtungsvorgabe von der Fahrzustandsbewertungseinheit an das Fahrdynamik-Regelsystem übertragen wird. Vorteilhafterweise kann dabei, wie bereits erläutert, vorgesehen sein, dass die Fahrtrichtungsvorgabe vor der Übertragung an das Fahrdynamik-Regelsystem manipuliert wird, insbesondere von der Fahrzustandsbewertungseinheit manipuliert wird.

Gemäß einer weiteren vorteilhaften Ausgestaltung des Verfahrens wird eine Information bezüglich eines tatsächlich eingestellten Radlenkwinkels des Kraftfahrzeugs an die Fahrzustandsbewertungseinheit übertragen. Dieser tatsächlich eingestellte Randlenkwinkel kann dabei insbesondere in dem Fall von einer Lenkvorgabe abweichen, wenn die Fahrzustandsbewertungseinheit zur Stabilisierung des Kraftfahrzeugs in einer kritischen Fahrsituation ein von der Lenkvorgabe abweichendes Steuerungssignal zur Ansteuerung des Lenkstellers des Steer-by-Wire-Lenksystems generiert. Vorteilhafterweise kann die Fahrzustandsbewertungseinheit den Lenksteller unter Berücksichtigung des tatsächlich eingestellten Radlenkwinkels verbessert ansteuern und das Kraftfahrzeug in einer kritischen Fahrsituation weiter verbessert stabilisieren. Insbesondere kann vorgesehen sein, dass das Steer-by-Wire-Lenksystem eine Koppelstange, insbesondere eine Zahnstange, umfasst, die über Spurstangen in bekannter Weise mit den lenkbaren Rädern des Kraftfahrzeugs verbunden ist, wobei der Lenksteller zur Einstellung eines Radlenkwinkels der gelenkten Räder auf die Koppelstange einwirkt. Vorteilhafterweise wird bei einer solchen Ausgestaltung die Position der Koppelstange, insbesondere die Position einer Zahnstange, des Steer-by-Wire-Lenksystems als Information bezüglich eines tatsächlich eingestellten Radlenkwinkels des Kraftfahrzeugs an die Fahrzustandsbewertungseinheit übertragen. Insbesondere ist dabei vorgesehen, dass die Position der Koppelstange nur an die Fahrzustandsbewertungseinheit übertragen wird und nicht auch zusätzlich an das Fahrdynamik-Regelsystem übertragen wird. Vorteilhafterweise wird so erreicht, dass das Fahrdynamik-Regelsystem basierend auf der jeweils aktuellen Fahrtrichtungsvorgabe und dem jeweils aktuellen Fahrzustand regelnd eingreift, um das Kraftfahrzeug in einer kritischen Fahrsituation zu stabilisieren.

Eine weitere vorteilhafte Ausgestaltung des Verfahrens sieht vor, dass die Fahrzustandsbewertungseinheit basierend auf den Informationen in Bezug auf die Fahrtrichtungsvorgabe und den Fahrzustand, insbesondere basierend auf der Fahrtrichtungsvorgabe und dem Fahrzustand, eine Referenz-Fahrlinie für das Kraftfahrzeug bestimmt und bei einer Abweichung von dieser Referenz-Fahrlinie eine kritische Fahrsituation erkennt. Vorteilhafterweise wird aus der bestimmten Referenz-Fahrlinie eine Soll-Position für die Koppelstange des Steer-by-Wire-Lenksystems bestimmt und der Lenksteller zur Einstellung der Soll-Position der Koppelstange angesteuert, wobei vorteilhafterweise die tatsächliche Position der Koppelstange an die Fahrzustandsbewertungseinheit übertragen wird. Vorteilhafterweise ist so mit hoher Zuverlässigkeit eine kritische Fahrsituation erkennbar. Weiter vorteilhaft erfolgt die Bewertung in Bezug auf eine kritische Fahrsituation durch die Fahrzustandsbewertungseinheit und durch das Fahrdynamik-Regelsystem auf der Grundlage unterschiedlicher Kriterien, wobei die Fahrzustandsbewertungseinheit vorteilhafterweise eine Abweichung von der bestimmten Referenz-Fahrlinie prüft und das Fahrdynamik-Regelsystem vorteilhafterweise eine Abweichung von einer bestimmten Soll-Gierrate prüft.

Insbesondere ist vorgesehen, dass die Fahrzustandsbewertungseinheit einen Lenkstellers des Steer-by-Wire-Lenksystems so ansteuert, dass der Radlenkwinkel der gelenkten Räder des Kraftfahrzeugs derart geändert wird, dass das Kraftfahrzeug der Referenz-Fahrlinie folgen soll. Vorteilhafterweise hat das hierfür erzeugte Steuerungssignal Priorität gegenüber einem Steuerungssignal, das von einer Steuereinheit des Steer-by-Wire-Lenksystems erzeugt wird, um den Lenksteller zur Umsetzung einer erfassten Lenkvorgabe anzusteuern.

Weiter vorteilhaft wird die Veränderung des Radlenkwinkels der gelenkten Räder in Folge einer Ansteuerung durch die Fahrzustandsbewertungseinheit aufgrund einer erkannten kritischen Fahrsituation nicht in eine entsprechende Lenkbewegung der Lenkhandhabe des Steer-by-Wire-Lenksystems umgesetzt wird. Vorteilhafterweise bleibt ein steuernder Eingriff durch die Fahrzustandsbewertungseinheit somit vorteilhafterweise für einen Fahrzeugnutzer zumindest weitestgehend unbemerkt. Insbesondere wird ein Fahrzeugnutzer nicht durch ein von der Fahrzustandsbewertungseinheit ausgelöstes Gegenlenken verunsichert, in dem das Lenkrad diese Lenkbewegung nicht nachstellt, insbesondere nicht 1:1 nachstellt.

Eine weitere vorteilhafte Ausgestaltung sieht allerdings vor, dass ein Steuerungseingriff der Fahrzustandsbewertungseinheit bei einer von der Fahrzustandsbewertungseinheit erkannten kritischen Fahrsituation über ein Bedienelement, insbesondere über eine Lenkhandhabe, einem Fahrzeugnutzer signalisiert wird. Vorteilhafterweise wird dazu ein Feedback-Aktuator des Steer-by-Wire-Lenksystems entsprechend angesteuert. Die Signalisierung erfolgt vorteilhafterweise als Vibration oder als Lenkwiderstandsimpuls in die entsprechende Richtung, in die die lenkbaren Räder gelenkt werden. Im Rahmen der Signalisierung wird aber vorteilhafterweise nicht die vollständige Lenkbewegung entsprechend dem eingestellten Radlenkwinkel nachgestellt.

Das des Weiteren zur Lösung der eingangs genannten Aufgabe vorgeschlagene Kraftfahrzeug umfasst ein Steer-by-Wire-Lenksystem und ein Fahrdynamik-Regelsystem, wobei das Steer-by-Wire-Lenksystem ausgebildet ist, eine Lenkvorgabe in einen Radlenkwinkel von lenkbaren Rädern des Kraftfahrzeugs umzusetzen, und wobei das Fahrdynamik-Regelsystem ausgebildet ist, unter Berücksichtigung einer Fahrtrichtungsvorgabe und eines Fahrzustands des Kraftfahrzeugs eine Bewertung in Bezug auf eine kritische Fahrsituation durchzuführen, und bei einer erkannten kritischen Fahrsituation durch gezielte Ansteuerung wenigstens einer Bremse des Kraftfahrzeugs und/oder wenigstens einer Antriebseinheit des Kraftfahrzeugs, das Kraftfahrzeug zur Vermeidung der kritischen Fahrsituation zu stabilisieren. Darüber hinaus umfasst das Kraftfahrzeug eine Fahrzustandsbewertungseinheit, wobei die Fahrzustandsbewertungseinheit zusätzlich zu dem Fahrdynamik-Regelsystem ausgebildet ist, eine Bewertung in Bezug auf eine kritische Fahrsituation durchzuführen, und bei einer von der Fahrzustandsbewertungseinheit erkannten kritischen Fahrsituation zu bewirken, dass ein von der Lenkvorgabe abweichender Radlenkwinkel zur Stabilisierung des Kraftfahrzeugs eingestellt wird. Hierdurch werden vorteilhafterweise die im Zusammenhang mit dem vorgeschlagenen Verfahren beschriebenen Vorteile erreicht.

Gemäß einer besonders vorteilhaften Ausgestaltung, umfasst das Steer-by-Wire-Lenksystem einen auf eine Koppelstange wirkenden Lenksteller zur Einstellung eines Radlenkwinkels der lenkbaren Räder und eine Steuereinheit, die insbesondere ausgebildet ist, den Lenksteller zur Umsetzung einer Lenkvorgabe in einen entsprechenden Radlenkwinkel anzusteuern. Vorteilhafterweise ist die Fahrzustandsbewertungseinheit dabei von der Steuereinheit des Steer-by-Wire-Lenksystems umfasst. Die Fahrzustandsbewertungseinheit ist vorteilhafterweise ausgebildet, Eingabesignale, insbesondere von einem Fahrzeugnutzer oder von einem autonomen Fahrsystem erzeugte Eingabesignale, zum Steuern des Kraftfahrzeugs und Zustandssignale in Bezug auf einen aktuellen Fahrzustand zu empfangen. Weiter vorteilhaft ist die Fahrzustandsbewertungseinheit ausgebildet, basierend auf den Eingabesignalen eine Referenz-Fahrlinie für das Kraftfahrzeug zu bestimmen und basierend auf den Zustandssignalen eine Abweichung von der Referenz-Fahrlinie zu erkennen. Weiter vorteilhaft ist die Fahrzustandsbewertungseinheit ausgebildet, bei einer erkannten Abweichung von der Referenz-Fahrlinie den Lenksteller abweichend von einer sich aus den Eingabesignalen ergebenden Lenkvorgabe anzusteuern und zur Beibehaltung der Referenz-Fahrlinie erforderliche Koppelstangenposition einzustellen. Weiter vorteilhaft ist die Fahrzustandsbewertungseinheit ausgebildet, eine Fahrtrichtungsvorgabe gegenüber einer sich aus den Eingabesignalen ergebenden Fahrtrichtungsvorgabe zu manipulieren, und die manipulierte Fahrtrichtungsvorgabe dem Fahrdynamik-Regelsystem bereitzustellen. Auf diese Weise kann das Fahrdynamik-Regelsystem vorteilhafterweise verbessert regelnd eingreifen.

Insbesondere ist vorgesehen, dass das Kraftfahrzeug ausgebildet ist, nach einem erfindungsgemäß ausgebildeten Verfahren betrieben zu werden.

Weitere vorteilhafte Einzelheiten, Merkmale und Ausgestaltungsdetails der Erfindung werden im Zusammenhang mit den in den Figuren (Fig.: Figur) dargestellten Ausführungsbeispielen näher erläutert. Dabei zeigt:
- Fig. 1: in einer vereinfachten perspektivischen Darstellung einen Ausschnitt eines Ausführungsbeispiels für ein erfindungsgemäß ausgebildetes Kraftfahrzeug;
- Fig. 2: ein Blockschaltbild zur Erläuterung eines Ausführungsbeispiels für ein erfindungsgemäß ausgebildetes Verfahren zum Betreiben eines Kraftfahrzeugs;
- Fig. 3: in einer vereinfachten Draufsicht ein weiteres Ausführungsbeispiel für ein erfindungsgemäß ausgebildetes Kraftfahrzeug bei einer erkannten ersten kritischen Fahrsituation; und
- Fig. 4: in einer vereinfachten Draufsicht das Kraftfahrzeug aus Fig. 3 bei einer erkannten zweiten kritischen Fahrsituation.

In den verschiedenen Figuren sind gleiche Teile in der Regel mit den gleichen Bezugszeichen versehen und werden daher mitunter auch jeweils nur im Zusammenhang mit einer der Figuren erläutert.

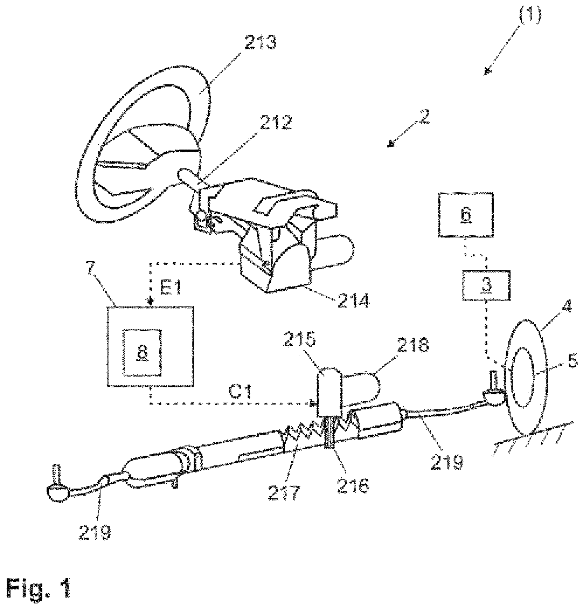

In Fig. 1 ist ein Ausführungsbeispiel für ein erfindungsgemäß ausgebildetes, aber nur ausschnittsweise gezeigtes Kraftfahrzeug 1 dargestellt. Das Kraftfahrzeug 1 ist insbesondere ein Personenkraftwagen (kurz PKW). Das Kraftfahrzeug 1 umfasst eine Antriebseinheit 6, ein Steer-by-Wire-Lenksystem 2 und ein Fahrdynamik-Regelsystem 3, wobei die Antriebseinheit 6 und das Fahrdynamik-Regelsystem 3 nur schematisch dargestellt sind.

Das Fahrdynamik-Regelsystem 3 ist eine konventionelle elektronische Stabilitätskontrolle. Das Fahrdynamik-Regelsystem 3 ist ausgebildet, unter Berücksichtigung einer aktuellen Fahrtrichtungsvorgabe, insbesondere eine Lenkvorgabe E1, und eines erfassten aktuellen Fahrzustands des Kraftfahrzeugs 1, der insbesondere eine aktuelle Geschwindigkeit, aktuelle Beschleunigungswerte, eine jeweilige Raddrehzahl und/oder eine aktuelle Gierrate des Kraftfahrzeugs 1 berücksichtigt, eine Bewertung in Bezug auf eine kritische Fahrsituation durchzuführen. Dazu vergleicht das Fahrdynamik-Regelsystem 3 permanent, ob der aktuelle Fahrzustand des Kraftfahrzeugs 1 zu der aktuellen Fahrtrichtungsvorgabe passt. Tritt dabei eine signifikante Abweichung auf, wird auf eine kritische Fahrsituation erkannt. Bei einer solchen erkannten kritischen Fahrsituation ist das Fahrdynamik-Regelsystem 3 weiter ausgebildet, durch gezielte Ansteuerung einzelner Bremsen 5 des Kraftfahrzeugs 1 und gegebenenfalls der Antriebseinheit 6 des Kraftfahrzeugs 1 das Kraftfahrzeug 1 zu stabilisieren, und insbesondere ein Schleudern des Kraftfahrzeugs 1 zu verhindern, und somit die kritische Fahrsituation zu beseitigen. Zur Auslösung von Steuerungseingriffen in das Steer-by-Wire-Lenksystem 2 des Kraftfahrzeugs ist das Fahrdynamik-Regelsystem 3 in diesem Ausführungsbeispiel nicht ausgebildet.

Das Steer-by-Wire-Lenksystem 2 umfasst in diesem Ausführungsbeispiel eine Lenksäule mit einer Lenkwelle 212 und einem Feedback-Aktuator 214. An einem Ende der Lenkwelle 212 ist eine als Lenkrad ausgebildete Lenkhandhabe 213 drehfest angeordnet. Über die Lenkhandhabe 213 kann ein Fahrzeugnutzer einen Lenkbefehl vorgeben, der als Lenkvorgabe E1 insbesondere mittels einer in Fig. 1 nicht explizit dargestellten Lenkwinkelsensoreinheit erfasst wird. Der Feedback-Aktuator 214 ist ausgebildet, ein Drehmoment beziehungsweise ein Lenkwiderstands-Drehmoment auf die Lenkwelle 212 auszuüben, insbesondere zur Vermittlung eines Lenkgefühls. Dieses Lenkwiderstands-Drehmoment ist von einem Fahrzeugnutzer des Kraftfahrzeugs 1 über die Lenkhandhabe 213 als Lenkwiderstand wahrnehmbar.

Das Steer-by-Wire-Lenksystem 2 weist zudem eine Steuereinheit 7, insbesondere eine ECU (ECU: Electronic Control Unit), auf, die ausgebildet ist, die von der Lenkwinkelsensoreinheit erfassten, die Lenkvorgabe E1 repräsentierenden Eingabesignale zu empfangen, und basierend auf diesen Eingabesignalen einen Lenksteller 215 des Steer-by-Wire-Lenksystems 2 anzusteuern, um die Lenkvorgabe E1 in einen entsprechenden Radlenkwinkel der lenkbaren Räder 4 des Kraftfahrzeugs 1 umzusetzen. Der Lenksteller 215 weist in diesem Ausführungsbeispiel ein Lenkritzel 216 und einen das Lenkritzel 216 antreibenden Elektromotor 218 auf. Durch die entsprechende Ansteuerung des Lenkstellers 215 mittels der Steuereinheit 7 wird das Lenkritzel 216 zur Umsetzung eines Lenkbefehls in eine Lenkbewegung der lenkbaren Räder 4 von dem Elektromotor des Lenkstellers 215 angetrieben. Dabei wirkt der Lenksteller 215 über das angetriebene Lenkritzel 216 auf eine in diesem Ausführungsbeispiel als Zahnstange ausgebildete Koppelstange 217 und löst so eine Lenkbewegung der lenkbaren Räder 4 des Kraftfahrzeugs aus, wobei die lenkbaren Räder 4 in diesem Ausführungsbeispiel über Spurstangen 219 mit der Koppelstange 217 verbunden sind. Die Spurstangen 219 selbst sind in bekannter Weise über Achsschenkel mit je einem gelenkten Rad 4 verbunden.

Das Steer-by-Wire-Lenksystem 2 umfasst in diesem Ausführungsbeispiel darüber hinaus eine Fahrzustandsbewertungseinheit 8, die in diesem Ausführungsbeispiel als Teil der Steuereinheit 7 ausgebildet ist. Die Fahrzustandsbewertungseinheit 8 ist zusätzlich zu dem Fahrdynamik-Regelsystem 3 und unabhängig von dem Fahrdynamik-Regelsystem 3 ausgebildet, eine Bewertung in Bezug auf eine kritische Fahrsituation durchzuführen. Dazu bewertet die Fahrzustandsbewertungseinheit 8 anhand von verschiedenen aktuellen Fahrzustandsparametern, ob eine von einem Fahrzeugnutzer oder eine von einem Fahrerassistenzsystem getätigte Vorgabe bezüglich einer Fahrtrichtung von dem Kraftfahrzeug entsprechend umgesetzt wird. Erkennt die Fahrzustandsbewertungseinheit 8 basierend auf dieser Bewertung eine kritische Fahrsituation, ist die Fahrzustandsbewertungseinheit 8 ausgebildet, den Lenksteller 215 des Steer-by-Wire-Lenksystems 2 derart anzusteuern, dass ein anderer Radlenkwinkel der lenkbaren Räder 8 eingestellt wird als der Radlenkwinkel, den eine erfasste Lenkvorgabe E1 eigentlich vorsehen würden. Bei einer erkannten kritischen Fahrsituation ist die Fahrzustandsbewertungseinheit 8 also letztlich für die Ansteuerung des Lenkstellers 215 verantwortlich. Dabei kann entweder vorgesehen sein, dass die Fahrzustandsbewertungseinheit 8 direkt das Ansteuerungssignal für den Lenksteller 215 generiert oder aber, dass die Fahrzustandsbewertungseinheit 8 die Steuereinheit 7 entsprechend beeinflusst, dass diese ein entsprechend geändertes Ansteuerungssignal erzeugt. Das abweichende Ansteuern des Lenkstellers 215 kann dabei insbesondere so weit gehen, dass ein zu einer Lenkvorgabe E1 gegenläufiger Radlenkwinkel eingestellt wird, insbesondere um durch ein entsprechendes Gegenlenken ein Übersteuern des Kraftfahrzeugs 1 zu verhindern beziehungsweise zu reduzieren und so eine kritische Fahrsituation zu vermeiden.

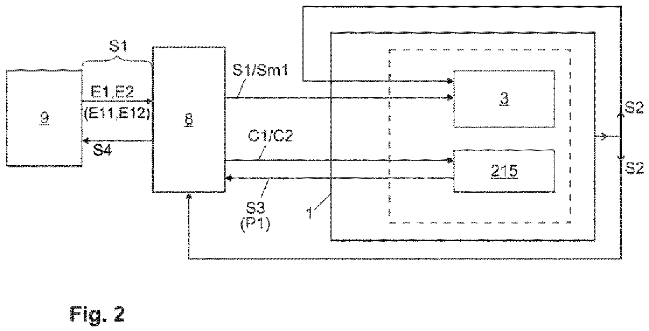

Unter Bezugnahme auf das in Fig. 2 gezeigte Blockschaltbild wird nachfolgend ein Ausführungsbeispiel für ein erfindungsgemäß ausgebildetes Verfahren zum Betreiben eines Kraftfahrzeugs 1 mit einem Steer-by-Wire-Lenksystem 2, das beim Betrieb des Kraftfahrzeugs 1 eine Lenkvorgabe E1 in einen Radlenkwinkel von lenkbaren Rädern 4 des Kraftfahrzeugs 1 umsetzt, und einem Fahrdynamik-Regelsystem 3, das unter Berücksichtigung einer Fahrtrichtungsvorgabe S1, Sm1 und eines Fahrzustands S2 des Kraftfahrzeugs 1 eine Bewertung in Bezug auf eine kritische Fahrsituation durchführt und bei einer erkannten kritischen Fahrsituation durch gezielte Bremsansteuerung das Kraftfahrzeug 1 zur Behebung der kritischen Fahrsituation stabilisiert, näher erläutert. Insbesondere kann vorgesehen sein, dass das unter Bezugnahme auf Fig. 1 erläuterte Kraftfahrzeug ausgebildet ist, gemäß einem solchen Verfahren betrieben zu werden, wobei insbesondere die Steuereinheit 7 des Kraftfahrzeugs 1, die Fahrzustandsbewertungseinheit 8 und das Fahrdynamik-Regelsystem 3 ausgebildet sind, die entsprechenden Verfahrensschritte auszuführen und auszulösen.

Bei dem Verfahren ist vorgesehen, dass eine Fahrzustandsbewertungseinheit 8 von Eingabemitteln 9 des Kraftfahrzeugs 1 eine Mehrzahl von Eingabesignalen E11, E12 empfängt, aus denen sich eine Fahrtrichtungsvorgabe S1 bestimmen lässt. Die Eingabemittel 9 umfassen in diesem Ausführungsbeispiel insbesondere eine Lenkhandhabe, eine Feedback-Aktuator, ein Beschleunigungspedal und ein Bremspedal, wobei ein mittels der Eingabemittel 9 von einem Fahrzeugnutzer vorgegebene Fahrtrichtungsvorgabe S1 als Eingabesignale an die Fahrzustandsbewertungseinheit 8 übertragen wird. Die Eingabesignale umfassen dabei insbesondere einen von einem Fahrer eingestellten Lenkwinkel (E11) einer Lenkhandhabe und ein von einem Fahrer aufgebrachtes Lenkmoment (E12), die zusammen eine Lenkvorgabe E1 repräsentieren. Weiter können die Eingabesignale eine Pedalstellung, eine Geschwindigkeit und eine Kraft einer Betätigung der Pedale umfassen. Gemäß einer Ausgestaltungsvariante kann auch vorgesehen sein, dass die Fahrtrichtungsvorgabe S1 in einem autonomen Fahrmodus von einem AD-Fahrsystem bereitgestellt wird.

Des Weiteren empfängt in dem in Fig. 2 gezeigten Ausführungsbeispiel die Fahrzustandsbewertungseinheit 8 von dem Kraftfahrzeug 1 Werte von einen aktuellen Fahrzustand S2 des Kraftfahrzeugs beschreibenden Parametern, wie insbesondere eine aktuelle Gierrate, ein aktueller Schräglaufwinkel des Kraftfahrzeugs und/oder aktuelle Bremsmomente. Die Fahrtrichtungsvorgabe S1 beziehungsweise die entsprechenden Eingabesignale E11, E12 werden im Normalbetrieb, wenn keine kritische Fahrsituation vorliegt, von der Fahrzustandsbewertungseinheit 8 unverändert an das Fahrdynamik-Regelsystem 3 gesendet. Das Fahrdynamik-Regelsystem 3 empfängt darüber hinaus direkt, also ohne Umweg über die Fahrzustandsbewertungseinheit 8, die den aktuellen Fahrzustand S2 beziehungsweise die den aktuellen Fahrzustand S2 definierenden Parameter.

Die Fahrzustandsbewertungseinheit 8 übernimmt in diesem Ausführungsbeispiel als Teil der Steuereinheit des Steer-by-Wire-Lenksystems des Kraftfahrzeugs 1 auch die Ansteuerung eines auf die Koppelstange des Steer-by-Wire-Lenksystems wirkenden Lenkstellers 215 mit einem Steuersignal C1, um eine einem gemäß der Lenkvorgabe E1 einzustellenden Radlenkwinkel entsprechende Koppelstangenposition einzustellen. Die eingestellte Koppelstangenposition P1 wird dabei von dem Lenksteller 215 als Information S3 bezüglich eines tatsächlich eingestellten Radlenkwinkels des Kraftfahrzeugs 1 an die Fahrzustandsbewertungseinheit 8 übertragen. Weiter bestimmt die Fahrzustandsbewertungseinheit 8 basierend auf der Fahrtrichtungsvorgabe S1, insbesondere basierend auf den empfangenen Eingabesignalen (E11, E22), und basierend auf dem Fahrzustand S2, insbesondere basierend auf den empfangenen Fahrzustandsparametern, eine Referenz-Fahrlinie für das Kraftfahrzeug 1. Weiter prüft die Fahrzustandsbewertungseinheit 8 basierend auf den den aktuellen Fahrzustand S2 definierenden Parametern, ob eine Abweichung von der bestimmten Referenz-Fahrlinie außerhalb eines vorgegebenen Toleranzbereiches vorliegt. Wird von der Fahrzustandsbewertungseinheit 8 eine solche Abweichung erkannt, so wird von der Fahrzustandsbewertungseinheit 8 auf eine kritische Fahrsituation erkannt. Parallel dazu prüft auch permanent das Fahrdynamik-Regelsystem 3, ob eine kritische Fahrsituation vorliegt.

Hat die Fahrzustandsbewertungseinheit 8 einen kritischen Fahrzustand des Kraftfahrzeugs erkannt, steuert die Fahrzustandsbewertungseinheit 8 den Lenksteller 215 des Steer-by-Wire-Lenksystems mit einem von dem Steuersignal C1 abweichenden anderen Steuersignal C2 so an, dass die Koppelstangenposition P1, und damit der Radlenkwinkel der gelenkten Räder des Kraftfahrzeugs, derart geändert wird, dass das Kraftfahrzeug 1 wieder der Referenz-Fahrlinie folgt und das Kraftfahrzeug 1 durch den eingestellten Radlenkwinkel stabilisiert wird. Die Veränderung des Radlenkwinkels in Folge der Ansteuerung des Lenkstellers 215 durch die Fahrzustandsbewertungseinheit 8 aufgrund der erkannten kritischen Fahrsituation wird dabei nicht in eine entsprechende Lenkbewegung der Lenkhandhabe 213 des Steer-by-Wire-Lenksystems umgesetzt. Das heißt, die Lenkhandhabe dreht sich nicht in die Position, die eigentlich der Stellung der gelenkten Räder entsprechen würde. Erst wenn die kritische Fahrsituation durch den Lenkeingriff durch die Fahrzustandsbewertungseinheit 8 und/oder den Regeleingriff durch das Fahrdynamik-Regelsystem 3 vorüber ist, wird eine Synchronisierung von Lenkhandhabe und der Position der lenkbaren Räder durchgeführt. Der von der fahrzeugnutzerseitigen Lenkvorgabe abweichende ein Steuerungseingriff der Fahrzustandsbewertungseinheit 8 bei einer von der Fahrzustandsbewertungseinheit 8 erkannten kritischen Fahrsituation wird dem Fahrzeugnutzer aber durch das Aufbringen eines Signals S4 auf ein Bedienelement, insbesondere die Lenkhandhabe, signalisiert, insbesondere durch das Aufbringen einer Vibration.

Wenn die Fahrzustandsbewertungseinheit 8 eine kritische Fahrsituation erkannt hat, weil das Kraftfahrzeug entsprechend stark von der bestimmten Referenz-Fahrlinie abweicht, so manipuliert die Fahrzustandsbewertungseinheit 8 als zusätzliche Reaktion die an das Fahrdynamik-Regelsystem zu übertragende Fahrtrichtungsvorgabe S1 vor der Übertragung an das Fahrdynamik-Regelsystem 3 derart, dass ein einer aktuellen Lenkvorgabe zugrundeliegender Lenkwinkel durch das Hinzufügen eines Offsets in dieselbe Lenkrichtung vergrößert wird, und somit ein größerer Lenkwinkel, insbesondere ein maximal großer Lenkwinkel, als der tatsächlich von dem Fahrer vorgegebene Lenkwinkel an das Fahrdynamik-Regelsystem 3 übertragen wird. Anstelle der Fahrtrichtungsvorgabe S1 wird also dann eine manipulierte Fahrtrichtungsvorgabe Sm1 an das Fahrdynamik-Regelsystem 3 übertragen.

Da das Fahrdynamik-Regelsystem 3 ebenfalls permanent das Vorliegen einer kritischen Fahrsituation prüft, erkennt das Fahrdynamik-Regelsystem 3 im Wesentlichen zeitgleich mit der Fahrzustandsbewertungseinheit 8 das Vorliegen einer kritischen Fahrzustands und bremst zur Stabilisierung des Kraftfahrzeugs gezielt die einzelnen Räder des Kraftfahrzeugs ab. Das Fahrdynamik-Regelsystem 3 ist dabei insbesondere so eingerichtet, dass dieses eine Ist-Gierrate zur Erreichung einer sich aus der Fahrtrichtungsvorgabe S1 und dem Fahrzustand S2 ergebenden Soll-Gierrate regelt. Aufgrund der manipulierten Fahrtrichtungsvorgabe S1 beziehungsweise aufgrund der Übertragung eines größeren Wertes als den tatsächlich Wert des eingestellten Lenkwinkels durch die Fahrzustandsbewertungseinheit 8 fällt der Regeleingriff dadurch stärker aus. Wird die Fahrsituation von der Fahrzustandsbewertungseinheit 8 wieder als unkritisch bewertet, wird wieder die Fahrtrichtungsvorgabe, die auch die Fahrzustandsbewertungseinheit 8 empfängt, in unveränderter Form an das Fahrdynamik-Regelsystem 3 weitergeleitet.

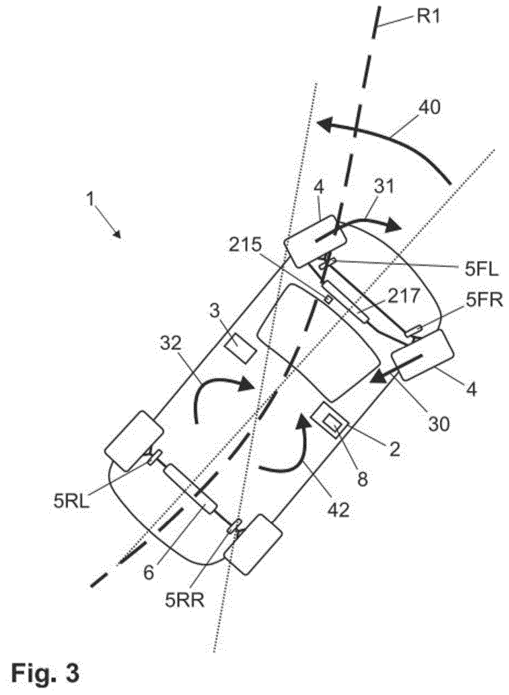

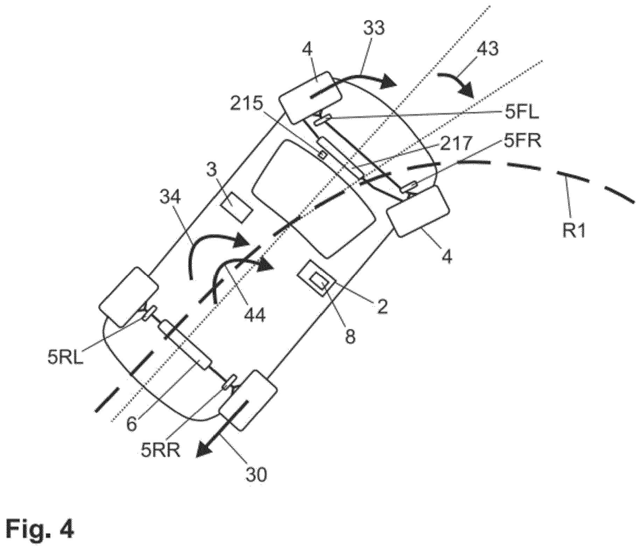

In Fig. 3 und Fig. 4 ist jeweils ein Kraftfahrzeug 1 dargestellt, das ausgebildet ist gemäß einem erfindungsgemäß ausgestalteten Verfahren betrieben zu werden, insbesondere gemäß einem Verfahren, wie unter Bezugnahme auf Fig. 2 erläutert. Das Kraftfahrzeug 1 weist dabei ein Steer-by-Wire-Lenksystem 2 mit einer Fahrzustandsbewertungseinheit 8 und ein Fahrdynamik-Regelsystem 3 auf. Das Fahrdynamik-Regelsystem 3 und die Fahrzustandsbewertungseinheit 8 sind dabei jeweils ausgebildet, unabhängig voneinander unter Berücksichtigung einer Fahrtrichtungsvorgabe und eines Fahrzustands des Kraftfahrzeugs eine Bewertung in Bezug auf eine kritische Fahrsituation durchzuführen. Bei einer erkannten kritischen Fahrsituation stabilisiert das Fahrdynamik-Regelsystem 3 das Kraftfahrzeug zur Behebung der kritischen Fahrsituation durch gezieltes Abbremsen einzelner Räder 4 des Kraftfahrzeugs 1, was insbesondere durch Ansteuerung der jeweiligen Bremsen 5 des Kraftfahrzeugs 1 und der Antriebseinheit 6 des Kraftfahrzeugs 1 erfolgt. Die Fahrzustandsbewertungseinheit 8 bewirkt darüber hinaus, dass mittels des auf die Koppelstange 217 des Steer-by-Wire-Lenksystems 2 wirkenden Lenkstellers 215 ein Radlenkwinkel der lenkbaren Räder 4 eingestellt wird, der weiter zur Stabilisierung des Kraftfahrzeugs beiträgt. Die Fahrzustandsbewertungseinheit 8 bestimmt dabei permanent während des Betriebs des Kraftfahrzeugs 1 basierend auf einer aktuellen Fahrtrichtungsvorgabe und einem aktuellen Fahrzustand des Kraftfahrzeugs 1 eine Referenz-Fahrlinie R1, wobei die Fahrzustandsbewertungseinheit 8 den Lenksteller 215 derart steuert, dass das Kraftfahrzeug der Referenz-Fahrlinie R1 folgt. Im Normalfall, also wenn keine kritische Fahrsituation vorliegt, wird dabei der Lenksteller 215 entsprechend einer Lenkvorgabe von einem Fahrzeugnutzer oder einen AD-Fahrsystem gesteuert. Weicht das Kraftfahrzeug 1 dabei aber von der bestimmten Referenz-Fahrlinie R1 ab, so steuert die Fahrzustandsbewertungseinheit 8 den Lenksteller 215 abweichend von der Lenkvorgabe an, um das Kraftfahrzeug 1 dazu zu bringen, der Referenz-Fahrlinie 1 weiter zu folgen.

Fig. 3 und Fig. 4 zeigen jeweils eine erkannte kritische Fahrsituation, wobei in Fig. 3 ein Übersteuern des Kraftfahrzeugs 1 und in Fig. 4 ein Untersteuern des Kraftfahrzeugs 1 dargestellt ist. In Fig. 3 und Fig. 4 sind zudem jeweils die von der Fahrzustandsbewertungseinheit 8 bestimmten Referenz-Fahrlinien R1 dargestellt, denen das Kraftfahrzeug 1 gemäß der Fahrtrichtungsvorgabe jeweils folgen soll.

In der in Fig. 3 dargestellten Fahrsituation steuert die Fahrzustandsbewertungseinheit 8 nun den Lenksteller 215 derart an, dass die gelenkten Räder 4 eine Gegenlenkbewegung ausführen, wodurch der Schräglaufwinkel der zum Kurveninneren gerichtet ist (Pfeil 40) reduziert wird (Pfeil 31) und die gegenüber der Referenz-Gierrate erhöhte Gierrate (Pfeil 42) reduziert wird (Pfeil 32). Durch das Fahrdynamik-Regelsystem 3 wird zudem die das vordere, kurvenäußere Rad 4 durch entsprechende Ansteuerung der vorderen rechten Bremse 5FR abgebremst (Pfeil 30). Durch die Maßnahmen der Fahrzustandsbewertungseinheit 8 und des Fahrdynamik-Regelsystem 3 wird ein Schleudern des Kraftfahrzeugs 1 verhindert und das Kraftfahrzeug 1 dazu gebracht, der Referenz-Fahrlinie R1 zu folgen.

In der in Fig. 4 dargestellten Fahrsituation, bei der ein Untersteuern des Kraftfahrzeugs 1 auftritt, steuert die Fahrzustandsbewertungseinheit 8 den Lenksteller 215 derart an, dass der Radlenkwinkel der gelenkten Räder 4 verringert wird (Pfeil 33), wodurch die Reifenhaftung auf dem Untergrund erhöht wird. Durch das Fahrdynamik-Regelsystem 3 wird zudem das hintere, kurveninnere Rad durch entsprechende Ansteuerung der hinteren rechten Bremse 5RR abgebremst (Pfeil 30), wodurch die gegenüber der Referenz-Gierrate erniedrigte Gierrate (Pfeil 44) vergrößert wird (Pfeil 34) und der zum Kurvenäußeren gerichtete Schräglaufwinkel (43) vergrößert wird. Durch die Maßnahmen der Fahrzustandsbewertungseinheit 8 und des Fahrdynamik-Regelsystem 3 wird ein Schleudern des Kraftfahrzeugs 1 verhindert und das Kraftfahrzeug 1 dazu gebracht, der Referenz-Fahrlinie R1 zu folgen.

Bei einem Untersteuern des Kraftfahrzeugs 1 ist somit insbesondere das Folgende vorgesehen: Der Fahrer gibt mit dem Lenkrad und mit den Pedalen die Referenz-Fahrlinie R1 vor. Das Fahrdynamik-Regelsystem 3 verstärkt die Bremswirkung auf das innere Hinterrad (Ansteuerung der Bremse 5RR). Der Lenksteller 215 reduziert veranlasst durch die Fahrzustandsbewertungseinheit 8 den Lenkwinkel. Die Fahrzeuggeschwindigkeit des Kraftfahrzeugs 1 wird reduziert, insbesondere durch entsprechende Ansteuerung der Antriebseinheit 6 des Kraftfahrzeugs 1. Selbst wenn der Fahrer den Lenkradwinkel vergrößert, wird der Lenksteller 215 weiter so angesteuert, dass die Referenz-Fahrlinie R1 beibehalten wird, sodass nicht zwingend der Lenkwinkel vergrößert wird.

Bei einem Übersteuern des Kraftfahrzeugs 1 ist insbesondere das Folgende vorgesehen: Der Fahrer markiert mit dem Lenkrad und den Pedalen die Referenz-Fahrlinie R1. Das Fahrdynamik-Regelsystem verstärkt die Bremswirkung auf das äußere Vorderrad (Ansteuerung der Bremse 5FR). Der Lenksteller 215 verändert den Radlenkwinkel veranlasst durch die Fahrzustandsbewertungseinheit 8 so, dass eine Gegenlenkbewegung entsteht (lenkt aus der Kurve heraus). Die Fahrzeuggeschwindigkeit des Kraftfahrzeugs wird verringert, insbesondere durch entsprechende Ansteuerung der Antriebseinheit 6 des Kraftfahrzeugs 1. Selbst wenn der Fahrer den Lenkradwinkel vergrößert, wird der Lenksteller 215 weiter so angesteuert, dass die Referenz-Fahrlinie R1 beibehalten wird, sodass in diesem Fall weiter gegenlenkt wird (was dem Gegenteil von dem entspricht, was der Fahrer tut). Wenn die Fahrzustandsbewertungseinheit 8 zudem die an das Fahrdynamik-Regelsystem 3 zu übertragende Fahrtrichtungsvorgabe manipuliert, und weitern den von dem Fahrer eingestellten Lenkwinkel oder sogar einen größeren Lenkwinkel vorgibt, greift das Fahrdynamik-Regelsystem 3 weiter aktiv steuernd ein, um die Übersteuerungswirkung zu verringern.

Die in den Figuren dargestellten und im Zusammenhang mit diesen erläuterten Ausführungsbeispiele dienen der Erläuterung der Erfindung und sind für diese nicht beschränkend.

### Bezugszeichenliste

- 1: Kraftfahrzeug
- 2: Steer-by-Wire-Lenksystem
- 212: Lenkwelle
- 213: Lenkhandhabe
- 214: Feedback-Aktuator
- 215: Lenksteller
- 216: Lenkritzel
- 217: Koppelstange
- 218: Elektromotor
- 219: Spurstange
- 3: Fahrdynamik-Regelsystem
- 4: lenkbares Rad
- 5: Bremse
- 6: Antriebseinheit
- 7: Steuereinheit des Steer-by-Wire-Lenksystems
- 8: Fahrzustandsbewertungseinheit
- 9: Eingabemittel
- 30: Abbremsen des Rades
- 31: Reduzierung des Schräglaufwinkels
- 32: Reduzierung der Gierrate
- 33: Verringerung des Lenkwinkels
- 34: Erhöhung der Gierrate
- 40: Schräglaufwinkel des Kraftfahrzeugs
- 42: gegenüber der Referenz-Gierrate höhere Gierrate
- 43: Schräglaufwinkel des Kraftfahrzeugs
- 44: gegenüber der Referenz-Gierrate niedrigere Gierrate
- C1: Steuersignal
- C2: Steuersignal
- E1: Lenkvorgabe
- E11: Eingabesignal (Lenkwinkel)
- E12: Eingabesignal (Lenkmoment)
- E2: Pedalstellung
- P1: Koppelstangenposition

- R1: Referenz-Fahrlinie
- S1: Fahrtrichtungsvorgabe
- S2: Fahrzustand
- S21: Fahrzustandssignal
- S22: Fahrzustandssignal
- S3: Information bezüglich eines tatsächlich eingestellten Radlenkwinkels
- S4: Informationssignal an Fahrzeugnutzer
- Sm1: manipulierte Fahrtrichtungsvorgabe

## Patentansprüche

1. Verfahren zum Betreiben eines Kraftfahrzeugs (1) mit einem Steer-by-Wire-Lenksystem (2) und einem Fahrdynamik-Regelsystem (3), wobei das Steer-by-Wire-Lenksystem (2) eine Lenkvorgabe (E1) in einen Radlenkwinkel von lenkbaren Rädern (4) des Kraftfahrzeugs (1) umsetzt, und wobei das Fahrdynamik-Regelsystem (3) unter Berücksichtigung einer Fahrtrichtungsvorgabe (S1, Sm1) und eines Fahrzustands (S2) des Kraftfahrzeugs (1) eine Bewertung in Bezug auf eine kritische Fahrsituation durchführt, und bei einer erkannten kritischen Fahrsituation durch gezielte Ansteuerung wenigstens einer Bremse (5) des Kraftfahrzeugs (1) und/oder wenigstens einer Antriebseinheit (6) des Kraftfahrzeugs (1) das Kraftfahrzeug (1) zur Behebung der kritischen Fahrsituation stabilisiert, **dadurch gekennzeichnet, dass** eine Fahrzustandsbewertungseinheit (8) zusätzlich zu dem Fahrdynamik-Regelsystem (3) eine Bewertung in Bezug auf eine kritische Fahrsituation durchführt, und bei einer von der Fahrzustandsbewertungseinheit (8) erkannten kritischen Fahrsituation der Radlenkwinkel zur Stabilisierung des Kraftfahrzeugs (1) verändert wird.

2. Verfahren nach Anspruch 1, **dadurch gekennzeichnet, dass** bei einer von der Fahrzustandsbewertungseinheit (8) erkannten kritischen Fahrsituation zusätzlich die Fahrtrichtungsvorgabe (S1) vor der Übertragung an das Fahrdynamik-Regelsystem (3) manipuliert wird, und das Fahrdynamik-Regelsystem (3) unter Berücksichtigung der manipulierten Fahrtrichtungsvorgabe (SM1) die Bewertung in Bezug auf eine kritische Fahrsituation durchführt.

3. Verfahren nach Anspruch 2, **dadurch gekennzeichnet, dass** die Fahrtrichtungsvorgabe (S1) eine erfasste Lenkvorgabe (E1) umfasst, und die erfasste Lenkvorgabe (E1) vor der Übertragung an das Fahrdynamik-Regelsystem (3) manipuliert wird.

4. Verfahren nach Anspruch 3, **dadurch gekennzeichnet, dass** eine erfasste Lenkvorgabe (E1) durch eine Vergrößerung eines der Lenkvorgabe (E1) zugrundeliegenden Wertes für den Lenkwinkel manipuliert wird.

5. Verfahren nach Anspruch 4, **dadurch gekennzeichnet, dass** die Vergrößerung durch ein Ersetzen des der erfassten Lenkvorgabe (E1) tatsächlich zugrundeliegenden Lenkwinkelwertes durch einen maximal möglichen Lenkwinkelwert derselben Lenkrichtung erfolgt.

6. Verfahren nach einem der vorstehenden Ansprüche, **dadurch gekennzeichnet, dass** der Fahrzustand (S2) des Kraftfahrzeugs (1) an die Fahrzustandsbewertungseinheit (8) und an das Fahrdynamik-Regelsystem (3) übertragen wird, wobei die Durchführung der Bewertung in Bezug auf eine kritische Fahrsituation durch die Fahrzustandsbewertungseinheit (8) und durch das Fahrdynamik-Regelsystem (3) unabhängig voneinander durchgeführt wird.

7. Verfahren nach einem der vorstehenden Ansprüche, **dadurch gekennzeichnet, dass** eine Fahrtrichtungsvorgabe (S1) an die Fahrzustandsbewertungseinheit (8) übertragen wird, und die Fahrtrichtungsvorgabe (S1) von der Fahrzustandsbewertungseinheit (8) an das Fahrdynamik-Regelsystem (3) übertragen wird.

8. Verfahren nach einem der vorstehenden Ansprüche, **dadurch gekennzeichnet, dass** eine Information (S3) bezüglich eines tatsächlich eingestellten Radlenkwinkels des Kraftfahrzeugs (1) an die Fahrzustandsbewertungseinheit übertragen wird.

9. Verfahren nach einem der vorstehenden Ansprüche, **dadurch gekennzeichnet, dass** die Fahrzustandsbewertungseinheit (8) basierend auf der Fahrtrichtungsvorgabe (S1) und dem Fahrzustand (S2) eine Referenz-Fahrlinie (R1) für das Kraftfahrzeug (1) bestimmt und bei einer Abweichung von dieser Referenz-Fahrlinie (R1) eine kritische Fahrsituation erkennt.

10. Verfahren nach Anspruch 9, **dadurch gekennzeichnet, dass** die Fahrzustandsbewertungseinheit (8) einen Lenksteller (215) des Steer-by-Wire-Lenksystems (2) so ansteuert, dass der Radlenkwinkel derart geändert wird, dass das Kraftfahrzeug (1) der Referenz-Fahrlinie (R1) folgt.

11. Verfahren nach einem der vorstehenden Ansprüche, **dadurch gekennzeichnet, dass** die Veränderung des Radlenkwinkels in Folge einer Ansteuerung durch die Fahrzustandsbewertungseinheit (8) aufgrund einer erkannten kritischen Fahrsituation nicht in eine entsprechende Lenkbewegung der Lenkhandhabe (213) des Steer-by-Wire-Lenksystems (2) umgesetzt wird.

12. Verfahren nach einem der vorstehenden Ansprüche, **dadurch gekennzeichnet, dass** ein Steuerungseingriff der Fahrzustandsbewertungseinheit (8) bei einer von der Fahrzustandsbewertungseinheit (8) erkannten kritischen Fahrsituation über ein Bedienelement (213) einem Fahrzeugnutzer signalisiert wird.

13. Kraftfahrzeug (1) umfassend ein Steer-by-Wire-Lenksystem (2) und ein Fahrdynamik-Regelsystem (3), wobei das Steer-by-Wire-Lenksystem (2) ausgebildet ist, eine Lenkvorgabe (E1) in einen Radlenkwinkel von lenkbaren Rädern (4) des Kraftfahrzeugs (1) umzusetzen, und wobei das Fahrdynamik-Regelsystem (3) ausgebildet ist, unter Berücksichtigung einer Fahrtrichtungsvorgabe (S1, Sm1) und eines Fahrzustands (S2) des Kraftfahrzeugs (1) eine Bewertung in Bezug auf eine kritische Fahrsituation durchzuführen, und bei einer erkannten kritischen Fahrsituation durch gezielte Ansteuerung wenigstens einer Bremse (5) des Kraftfahrzeugs (1) und/oder wenigstens einer Antriebseinheit (6) des Kraftfahrzeugs (1), das Kraftfahrzeug (1) zur Vermeidung der kritischen Fahrsituation zu stabilisieren, **dadurch gekennzeichnet, dass** das Kraftfahrzeug (1) weiter eine Fahrzustandsbewertungseinheit (8) umfasst, wobei die Fahrzustandsbewertungseinheit (8) zusätzlich zu dem Fahrdynamik-Regelsystem (3) ausgebildet ist, eine Bewertung in Bezug auf eine kritische Fahrsituation durchzuführen, und bei einer von der Fahrzustandsbewertungseinheit (8) erkannten kritischen Fahrsituation zu bewirken, dass ein von der Lenkvorgabe (E1) abweichender Radlenkwinkel zur Stabilisierung des Kraftfahrzeugs (1) eingestellt wird.

14. Kraftfahrzeug (1) nach Anspruch 13, **dadurch gekennzeichnet, dass** das Steer-by-Wire-Lenksystem (2) einen auf eine Koppelstange (217) wirkenden Lenksteller (215) zur Umsetzung einer Lenkvorgabe (E1) und eine Steuereinheit (7) umfasst, wobei die Fahrzustandsbewertungseinheit (8) von der Steuereinheit (7) des Steer-by-Wire-Lenksystems (2) umfasst ist, wobei die Fahrzustandsbewertungseinheit (8) ausgebildet ist, Eingabesignale (E1, E2) zum Steuern des Kraftfahrzeugs (1) und Zustandssignale (S21, S22)) in Bezug auf einen aktuellen Fahrzustand (S2) zu empfangen, basierend auf den Eingabesignalen (E11, E12) eine Referenz-Fahrlinie (R1) zu bestimmen und basierend auf den Zustandssignalen (S21, S22) eine Abweichung von der Referenz-Fahrlinie (R1) zu erkennen, bei einer erkannten Abweichung von der Referenz-Fahrlinie (R1) den Lenksteller (215) abweichend von einer sich aus den Eingabesignalen (E1, E2) ergebenden Lenkvorgabe (E1) anzusteuern und eine zur Beibehaltung der Referenz-Fahrlinie (R1) erforderliche Koppelstangenposition (P1) einzustellen, und eine Fahrtrichtungsvorgabe (S1) gegenüber einer sich aus den Eingabesignalen (E11, E12) ergebenden Fahrtrichtungsvorgabe (S1) zu manipulieren, und die manipulierte Fahrtrichtungsvorgabe (Sm1) dem Fahrdynamik-Regelsystem (3) bereitzustellen.

15. Kraftfahrzeug (1) nach Anspruch 13 oder Anspruch 14, **dadurch gekennzeichnet, dass** das Kraftfahrzeug (1) ausgebildet ist, nach einem Verfahren gemäß einem der Ansprüche 1 bis 12 betrieben zu werden.
